# EUROPÄISCHE PATENTSCHRIFT

(11) **EP 0 638 450 B1**
(45) Veröffentlichungstag und Bekanntmachung des Hinweises auf die Patenterteilung: **22.01.1997**
(21) Anmeldenummer: 94111527.1
(22) Anmeldetag: 23.07.1994
(51) Int. Cl.: B60J 3/02

(54) **Schwenklagerböckchen für Fahrzeugsonnenblenden**
Pivotal bearing support for a vehicle sun visor
Support de pivotement pour pare-soleil de véhicule

(30) Priorität: 09.08.1993 DE 4326660
(43) Veröffentlichungstag der Anmeldung: 15.02.1995
(73) Patentinhaber: BECKER GROUP EUROPE GmbH, 42285 Wuppertal (DE)
(72) Erfinder: Viertel, Lothar, D-66802 Altforweiler (DE); Welter, Patrick, F-57730 La Chambre (FR)

(56) Entgegenhaltungen:
- EP-A- 0 413 584
- DE-A- 2 341 940
- DE-B- 2 544 969
- US-A- 5 082 322
- US-A- 5 098 151

## Beschreibung

Die Erfindung bezieht sich auf ein Schwenklagerböckchen für Fahrzeugsonnenblenden, das aus einem Kunststoff-Spritzgußteil besteht und einen flanschartigen Grundkörper mit einem an dessen Rückseite angeformten Lagerdom aufweist, der zur Lagerung eines Endbereichs einer Sonnenblendenachse mit einer auch den Grundkörper durchsetzenden Durchgangsbohrung ausgebildet ist. Dieses Schwenklagerböckchen entsprechend dem Oberbegriff des Anspruchs 1 ist aus der DE-A- 2 341 940 bekannt.

Schwenklagerböckchen für Sonnenblenden dienen dazu, einen Schenkel einer L-förmigen Sonnenblendenachse, deren zweiter Schenkel im Sonnenblendenkörper gelagert ist, drehbeweglich aufzunehmen. Damit wird ermöglicht, daß der Sonnenblendenkörper zum einen vor die Windschutzscheibe geklappt und zum anderen auch zu einer Fahrzeugseitenscheibe geschwenkt werden kann. Während der Sonnenblendenkörper in seiner Normallage vor der Windschutzscheibe von zwei Achsen, der L-förmigen Sonnenblendenachse und einer in einem Gegenlagerböckchen lösbar eingerasteten Gegenlagerachse, getragen wird, ruht das Gewicht des Sonnenblendenkörpers in einer Stellung vor der Seitenscheibe ausschließlich auf der L-förmigen Sonnenblendenachse und dem Schwenklagerböckchen. Aus diesem Grunde ist eine zuverlässige Festlegung des Schwenklagerböckchens an der Fahrzeugkarosserie wichtig und daher in der Regel vorgesehen, dasselbe mittels Schrauben an der Fahrzeugkarosserie zu befestigen, wie dies z.B. in der DE- 25 44 969 B2 gezeigt ist. Dabei müssen aber die Böckchen, um die Schraublöcher zu finden, sehr sorgfältig positioniert werden, was als langwierig und lästig empfunden wird. Von besonderem Nachteil bei der herkömmlichen Befestigungsart ist aber der durch die erforderliche Schraubarbeit bedingte beträchtliche Montageaufwand mit den daraus resultierenden Kosten.

Durch die erwähnte DE-A 23 41 940 oder auch durch die DE-A 29 39 145 sind zwar schon Vorschläge zur schraubenlosen Befestigung von Schwenklagerböckchen an einer Fahrzeugkarosserie bekanntgeworden, jedoch kamen diese Vorschläge wegen gravierender technischer Mängel nicht über das Versuchsstadium hinaus, d. h. nie zum praktischen Einsatz.

Der Erfindung liegt hiernach die Aufgabe zugrunde, ein Schwenklagerböckchen der eingangs genannten Art zu schaffen, daß sich bei vergleichsweise einfacher und kostengünstiger Herstellbarkeit schnell und einfach montieren läßt und eine auch auf Dauer zuverlässige Befestigungsanordnung gewährleistet.

Zur Lösung dieser Aufgabe ist erfindungsgemäß vorgesehen, daß der Grundkörper an seiner Rückseite beidseitig des Lagerdoms und jeweils von diesem beabstandet angeformte Befestigungselemente trägt, die jeweils einen etwa senkrecht am Grundkörper angebundenen Steg und einen am freien Ende derselben etwa rechtwinklig angeformten Haken, von denen der eine nach links und der andere nach rechts ausgerichtet ist, umfassen und geeignet sind, durch Karosseriedurchbrüche, deren Öffnungsquerschnitt größer als der Hakenquerschnitt ist, hindurchgesteckt zu werden, um nach einer geringfügigen Drehbewegung des Grundkörpers mit ihren Haken die Karosseriewand zu hintergreifen, daß jeder Steg an der dem Haken abgewandten Seite eine Rastausnehmung aufweist, daß zur Verriegelung der Haken in die Karosseriedurchbrüche zusätzlich einführbare Zapfen mit in die Rastausnehmungen einschnappbaren Rastnasen vorgesehen sind und daß in dem Grundkörper fensterartige Öffnungen zum Durchführen der Zapfen ausgebildet sind.

Durch diese erfindungsgemäßen Maßnahmen ist es gelungen, einer von der Abnehmerschaft massiv vorgetragenen Forderung zur Bereitstellung eines Schwenklagerböckchens, bei dem eine Verschraubung bei der Befestigung entfallen soll, zu entsprechen. Die Erfindung ermöglicht es, das Schwenklagerböckchen an einem Karosserieblech einfach dadurch zu befestigen, daß die Befestigungselemente in die Karosseriedurchbrüche eingeführt, um etwa 7^{o} gedreht (eingerenkt) und hiernach verriegelt werden. In die Fahrzeugkarosserie sind nun außer dem üblichen Loch für den Befestigungsdom zwei weitere Stanzlöcher einzubringen, was aber keinen zusätzlichen Aufwand bedeutet, denn bisher mußten auch für die Befestigungsschrauben Öffnungen im Karosserieblech vorgesehen werden.

Gemäß einer Weiterbildung der Erfindung, sind die fensterartigen Öffnungen des Grundkörpers durch in diese passende Deckel verschließbar, die einerseits über Filmscharniere einstückig am Grundkörper angebunden sind und andererseits die daran einstückig angeformten Zapfen tragen. Diese Maßnahme hat den Vorteil einer einstückigen Ausbildung des Schwenklagerböckchens und erspart damit die Herstellung und Lagerhaltung von Einzelteilen.

Andererseits kann eine Ausgestaltung der Erfindung auch darin bestehen, daß der Grundkörper mit einer Abdeckkappe bestückbar ist, an welcher sich die in die Karosseriedurchbrüche zusätzlich einführbaren Zapfen befinden. Dabei sollte die Abdeckkappe bevorzugt aus einem Kunststoff-Spritzgußteil bestehen und einstückig mit den Zapfen ausgebildet sein. Diese Maßnahmen ermöglichen es, den Grundkörper je nach Anforderungskatalog aus verschiedenen, auch besonders kostengünstigen Kunststoffen herzustellen, da keine Rücksicht auf die Oberflächengüte zu nehmen ist. Die Abdeckkappe wiederum braucht keine Festigkeitsanforderungen sondern lediglich eine Zierfunktion zu erfüllen.

Ausführungsbeispiele der Erfindung werden im folgenden anhand der Zeichnung näher erläutert. Es zeigen:
- Fig. 1: das Schwenklagerböckchen gemäß einer ersten Ausführungsform im montierten Zustand in perspektivischer Darstellungsmanier,
- Fig. 2: einen Schnitt, etwa folgend der Linie II-II in Fig. 1,
- Fig. 3: eine die Montage des Schwenklagerböckchens nach Fig. 1 verdeutlichende perspektivische Explosivdarstellung,
- Fig. 4: einen Schnitt, etwa folgend der Linie IV-IV in Fig. 3,
- Fig. 5: eine perspektivische Explosivdarstellung eines zweiten Ausführungsbeispiels und
- Fig. 6: einen Schnitt, etwa folgend der Linie VI-VI in Fig. 5.

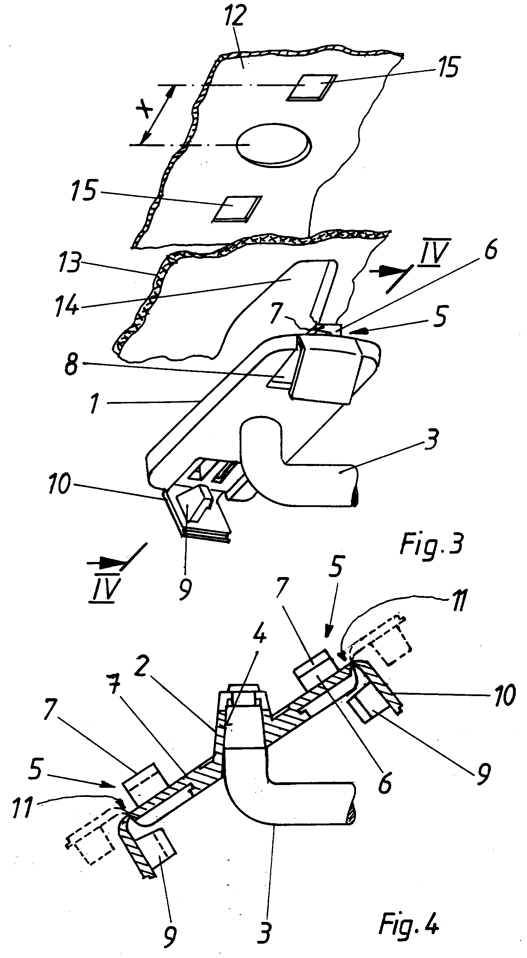

Das Schwenklagerböckchen ist als Kunststoff-Spritzgußteil ausgeführt und besteht aus einem relativ flachen Grundkörper 1 von etwa rechteckiger oder ellipsenförmiger Gestaltung mit einem an dessen Rückseite angeformten Lagerdom 2, der zur Lagerung eines Endbereichs einer L-förmigen Sonnenblendenachse 3 mit einer auch den Grundkörper 1 durchsetzenden Durchgangsbohrung 4 ausgebildet ist. An der Rückseite des Grundkörpers 1 sind vom Lagerdom 2 mit einem Maß X beanstandet angeformte Befestigungselemente 5 angeordnet. Die Befestigungselemente 5 befinden sich auf der Längsmittenachse des Grundkörpers 1, oberhalb und unterhalb des Lagerdoms und umfassen jeweils einen am Grundkörper 1 angebundenen Steg 6 und einen am freien Ende desselben etwa rechtwinklig angeformten Haken 7. Wie die Zeichnung (Fig. 4) zeigt, ist der eine Haken 7 nach links und der andere Haken 7 nach rechts ausgerichtet.

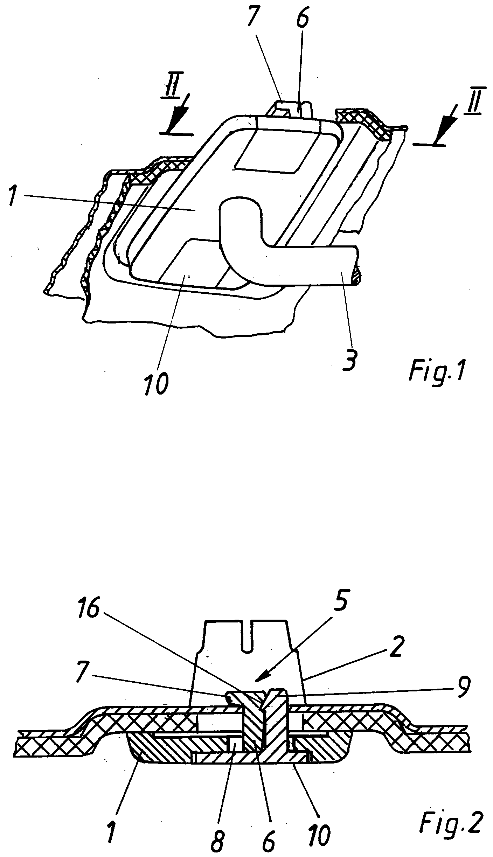

Der Grundkörper 1 weist weiterhin im Bereich der Befestigungselemente 5 ausgebildete fensterartige Öffnungen 8 auf. Diese fensterartigen Öffnungen 8 dienen zum Durchführen von Zapfen 9, die die Befestigungsanordnung des Schwenklagerböckchens an einer Fahrzeugkarosserie sichern. Beim Ausführungsbeispiel gemäß Fig. 1 bis 4 ist vorgesehen, daß die fensterartigen Öffnungen 8 durch in diese passende Deckel 10 verschließbar sind. Dabei sind die Deckel 10 jeweils über ein Filmscharnier 11 einstückig mit dem Grundkörper 1 ausgebildet und sie tragen auch in einstückig angeformter Anordnung die Zapfen 9. In Fig. 4 ist mit gestrichelten Linien die Lage der Deckel 10 mit Zapfen 9 im Werkzeug, also bei der Fertigung angedeutet.

Für die Montage kann vorgesehen sein, daß der Grundkörper 1 ebenso wie der nichtgezeigte Sonnenblendenkörper mit der Sonnenblendenachse 3 eine in herkömmlicherweise vormontierte Baueinheit bilden. Im Anlieferungszustand sind die Deckel 10 offen. Um das Schwenklagerböckchen an ein Karosserieblech 12 anzubringen, ist dieses mit einem Lochbild nach Fig. 3 auszutatten, wie auch eine in der Regel vorhandene Dachverkleidung 13 mit einer Ausstanzung 14 zu versehen ist. Der Einbau (Bandmontage) wird nun so durchgeführt, daß die Befestigungselemente 5 in die quadratischen Korosseriedurchbrüche 15 eingeführt werden und daß der Grundkörper 1 hiernach geringfügig, z.B. um 7^{o} gedreht wird. Dadurch greifen die mit einer Anlaufschräge ausgebildeten Haken 7 hinter das Karosserieblech 12. Im Anschluß hieran sind lediglich noch die beiden Deckel 10 einzuklappen. Die an den Deckeln angebildeten Zapfen 9 füllen den Freibereich der Karosseriedurchbrüche 15 aus und Verriegeln damit die Befestigungselemente 5. Zusätzlich zu einer Reibschlußverbindung ist vorgesehen, daß die Zapfen 9 mit in Rastausnehmungen 16 einschnappbaren Rastnasen 17 versehen sind. Eine Demontage ist möglich, indem die Deckel 10 z.B. mittels eines Schraubendrehers ausgeklappt werden.

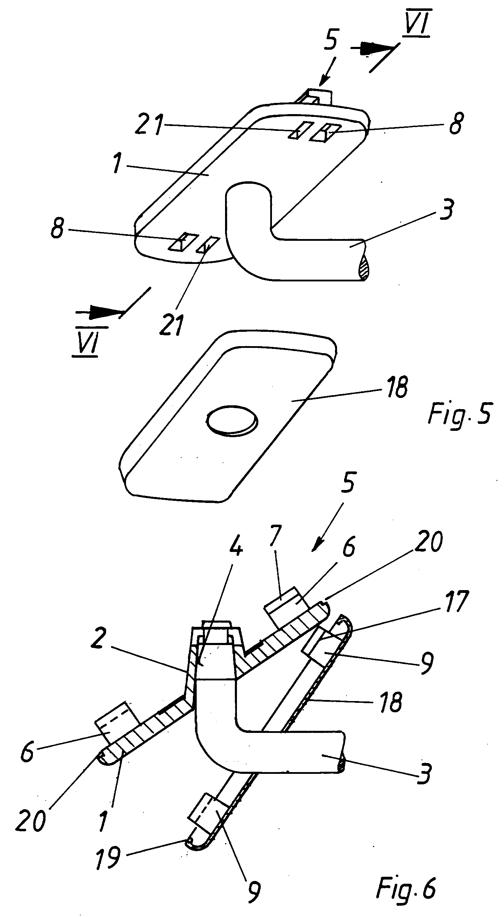

Beim Ausführungsbeispiel nach Fig. 5 und 6 besitzt der Grundkörper 1 einen Aufbau ähnlich dem vorbeschriebenen Ausführungsbeispiel, weshalb auch übereinstimmende Bezugszeichen verwendet wurden. Die zur Verriegelung der Befestigungselemente 5 dienenden Zapfen 9 sitzen hier jedoch nicht an Deckeln 10 sondern einstückig angeformt an einem separaten Bauteil in Form einer Abdeckkappe 18, die auf den Grundkörper 1 aufsteckbar ist. Im Anlieferungszustand einer Sonnenblende sitzt die Abdeckkappe 18, wie in Fig. 6 gezeigt lose auf der Sonnenblendenachse 3, so daß der Grundkörper 1 in der anhand der Fig. 1 bis 4 beschriebenen Art an einem Karosserieblech 12 angebracht werden kann. Zur Verriegelung der Befestigungselemente 5 ist lediglich die Abdeckkappe 18 auf den Grundkörper 1 aufzudrücken, wobei dann die Zapfen 9 in die Karosseriedurchbrüche 15 gelangen.

Zusätzlich zu den Rastnasen 17 kann eine weitere Verklipsung zwischen Grundkörper 1 und Abdeckkappe 18 vorgesehen sein, wozu der Grundkörper 1 Rastaussparungen 20 und die Abdeckkappe 18 Rastvorsprünge 19 aufweisen.

Die fensterartigen Öffnungen 8 im Grundkörper 1 dienen zum Durchführen der Zapfen 9, während die zusätzlichen Öffnungen 21 für die Bildung der Haken 7 im Werkzeug dienen, also keine Funktion besitzen.

## Patentansprüche

1. Schwenklagerböckchen für Fahrzeugsonnenblenden, das aus einem Kunststoff-Spritzgußteil besteht und einen flanschartigen Grundkörper (1) mit einem an dessen Rückseite angeformten Lagerdom (2) aufweist, der zur Lagerung eines Endbereichs einer Sonnenblendenachse (3) mit einer auch den Grundkörper (1) durchsetzenden Durchgangsbohrung (4) ausgebildet ist, dadurch gekennzeichnet, daß der Grundkörper (1) an seiner Rückseite beidseitig des Lagerdoms (2) und jeweils von diesem beabstandet angeformte Befestigungselememente (5) trägt, die jeweils einen etwa senkrecht am Grundkörper (1) angebundenen Steg (6) und einen am freien Ende derselben etwa rechtwinklig angeformten Haken (7), von denen der eine nach links und der andere nach rechts ausgerichtet ist, umfassen und geeignet sind, durch Karosseriedurchbrüche (15), deren Öffnungsquerschnitt größer als der Hakenquerschnitt ist, hindurchgesteckt zu werden, um nach einer geringfügigen Drehbewegung des Grundkörpers (1) mit ihren Haken (7) die Karosseriewand (12) zu hintergreifen, daß jeder Steg (6) an der dem Haken (7) abgewandten Seite eine Rastausnehmung (16) aufweist, daß zur Verriegelung der Haken (7) in die Karosseriedurchbrüche (15) zusätzlich einführbare Zapfen (9) mit in die Rastausnehmungen (16) einschnappbaren Rastnasen (17) vorgesehen sind und daß in dem Grundkörper (1) fensterartige Öffnungen (8) zum Durchführen der Zapfen (9) ausgebildet sind.

2. Schwenklagerböckchen nach Anspruch 1, dadurch gekennzeichnet, daß die fensterartigen Öffnungen (8) des Grundkörpers (1) durch in diese passende Deckel (10) verschließbar sind, die einerseits über Filmscharniere (11) einstückig am Grundkörper (1) angebunden sind und andererseits die daran einstückig angeformten Zapfen (9) tragen.

3. Schwenklagerböckchen nach Anspruch 1, dadurch gekennzeichnet, daß der Grundkörper (1) mit einer Abdeckkappe (18) bestückbar ist, an welcher sich die in die Karosseriedurchbrüche (15) zusätzlich einführbaren Zapfen (9) befinden.

4. Schwenklagerböckchen nach Anspruch 3, dadurch gekennzeichnet, daß die Abdeckkappe (18) aus einem Kunststoff-Spritzgußteil besteht und einstückig mit den Zapfen (9) ausgebildet ist.

## Claims

1. A pivotal support stud for sun visors for vehicles, which consists of a plastic material injection moulded part and comprises a base body (1) with a support dome (2) which is formed on the back side of said body, and which is provided for supporting an end part of a sun visor axle (3) with a through hole (4) which is formed also through the base body (1), **characterized in that** the base body (1) is formed on its back side on both sides of the support dome (2) with fixing elements (5) distant from the dome, each element comprising a web (6) which is connected approximately in a vertical direction to the base body (1) and a hook (7) which is formed approximately perpendicularly to the free end of said web, one of which is directed to the left and the other to the right, which are adapted to being inserted through openings (15) in the vehicle body, the section area of these openings being greater than the area of the section of the hooks, in order to catch with their respective hook (7) the vehicle body wall (12) from behind after a short rotation, in that each web (6) is provided on its side opposite to the hook (7) with a detent recess (16), in that for the locking of the hooks (7) in the vehicle body openings (15) there are provided additional insertable pins (9) with detent projections (17) which snap into the detent recess (16) and in that in the base body (1) there are formed window like openings (8) for the insertion of said pins (9).

2. A pivotal support stud according to claim 1, **characterized in that** the window like openings (8) of the base body (1) are closed by means of matching covers (10), which are integrally connected by means of film hinges (11) to the base body (1) and hold the pins (9) which are one piece integrally moulded on said covers.

3. A pivotal support stud according to claim 1, **characterized in that** the base body (1) is provided with a cover cap (18), on which there are provided the additional pins (9) which are insertable in the openings (15) of the vehicle body.

4. A pivotal support stud according to claim 3, **characterized in that** the cover cap (18) is formed by a plastic material injection moulded part and is one piece integrally moulded with the pins (9).

## Revendications

1. Support d'axe de pivotement pour pare-soleil pour vehicules, lequel se compose d'une pièce en matière synthétique moulée par injection et présente un corps de base (1) en guise de flasque et ayant un dôme de support (2), ce dôme étant prévu sur le côté arrière du corps de base (1) et présentant, pour le soutien d'une zone terminale d'un axe (3) de pare-soleil, un trou de passage (4) traversant également le corps de base (1), caractérisé en ce que le corps de base (1) porte, sur son côté arrière et aux deux côtés du dôme de support (2), des éléments de fixation (5) respectivement espacés de ce dôme de support, lesquels sont ménagés sur ce dernier et comportent respectivement une nervure (6), reliée à peu près perpendiculairement au corps de base (1), et un crochet (7) sensiblement en forme d'angle droit prévu sur l'extrémité libre de la nervure, l'un de ces éléments étant orienté à gauche et l'autre à droite, ces éléments de fixation étant adaptés à être enfoncés dans des passages (15) de la carrosserie (12), la section transversale d'ouverture de ces derniers étant plus large que la section transversale du crochet, de manière à engager a l'arrière, après un mouvement de rotation très petit du corps de base (1), la paroi de la carrosserie (12) par leur crochet (7), en ce que chaque nervure (6) présente sur son côté qui ne se trouve pas en regard du crochet (7) un évidement d'encliquetage (16), en ce que pour le blocage des crochets (7) dans les passages (15) de la carrosserie on prévoit des chevilles (9) également à insérer, en plus, et ayant des ergots d'encliquetage (17) qui se déclenchent dans les évidements d'encliquetage (16), et en ce que dans le corps de base (1) sont ménagées des ouvertures (8) en guise de fenêtres pour le passage des chevilles (9).

2. Support d'axe de pivotement selon la revendication 1, caractérisé en ce que les ouvertures (8) en guise de fenêtres du corps de base (1) peuvent être fermées par des couvercles (10) qui sont adaptés à celles-ci et qui, d'une part, sont reliés d'un seul tenant au corps de base (1) par des charnières-pellicules (11) et, d'autre part, portent les chevilles (9) constituées d'une seule pièce avec ceux-ci.

3. Support d'axe de pivotement selon la revendication 1, caractérisé en ce que le corps de base (1) peut être équipé d'un capuchon de couverture (18) sur lequel se trouvent les chevilles (9) à insérer également, en plus, dans les passages (15) de la carrosserie.

4. Support d'axe de pivotement selon la revendication 3, caractérisé en ce que la capuchon de couverture (18) se compose d'une pièce en matière synthétique moulée par injection et est venu d'une pièce avec les chevilles (9).
